# DEMANDE DE BREVET EUROPEEN

(11) **EP 1 930 202 A1**
(43) Date de publication de la demande: **11.06.2008**
(21) Numéro de dépôt: 07301630.5
(22) Date de dépôt: 05.12.2007
(51) Int. Cl.: B60K 37/02, G01D 7/04

(54) **Combiné d'instrumentation à effet de profondeur**

(30) Priorité: 06.12.2006 FR 0655348
(71) Demandeur: PEUGEOT CITROËN AUTOMOBILES SA, 78140 Vélizy Villacoublay (FR)
(72) Inventeur: Lebreton, Etienne, 92170 Vanves (FR)

(57) **Abrégé**

L'invention concerne un dispositif formant combiné d'instrumentation pour véhicule automobile.

Selon l'invention, le dispositif comprend un cadran d'affichage (12), un projecteur (15) d'informations (20) relatives au fonctionnement du véhicule, et une vitre réfléchissante formant écran (16), interposée entre le cadran (12) et le projecteur (15), la vitre réfléchissante (16) étant apte à donner une image virtuelle (17) localisée au niveau du cadran (12) des informations (20) issues du projecteur (15).

L'invention trouve application dans le domaine des véhicules automobiles.

## Description

L'invention concerne un dispositif formant combiné d'instrumentation pour véhicule automobile.

Un dispositif de ce type permet l'affichage de paramètres relatifs au fonctionnement d'un véhicule automobile tels que la vitesse de déplacement, le nombre de tours moteur ou le niveau de carburant de ce véhicule, au moyen d'un composant électronique intégré mécaniquement au centre du combiné.

Pour diminuer le coût de fabrication des pièces constitutives d'un véhicule automobile, des études sont couramment développées pour augmenter le nombre de ces pièces pouvant être standardisées, c'est-à-dire pouvant être utilisées à l'identique au sein de véhicules présentant pourtant des silhouettes ou des gammes différentes.

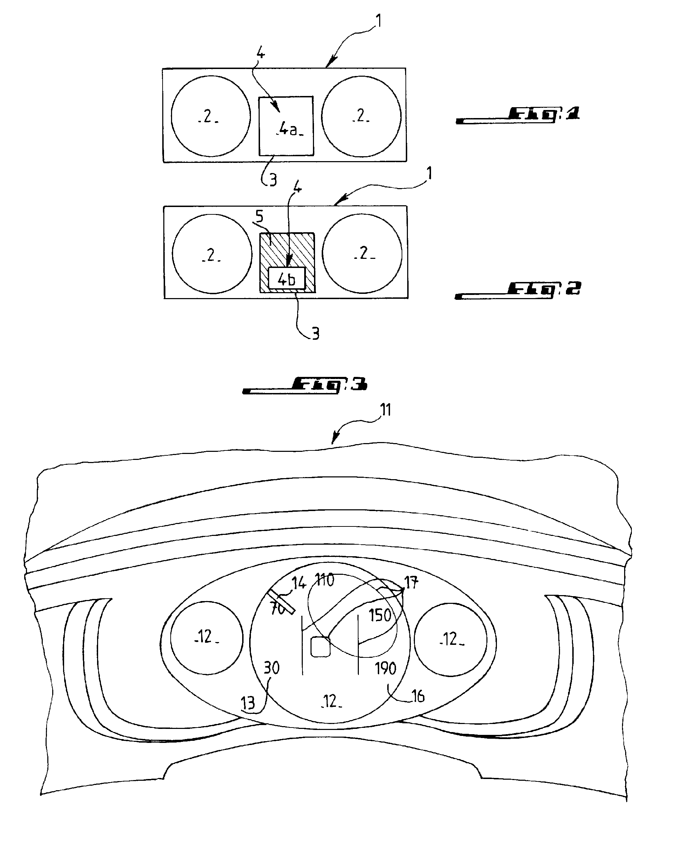

L'écran principal 1 du combiné d'instrumentation représenté sur la figure 1 fait aujourd'hui partie de ces pièces destinées à être standardisées. Cet écran 1 comprend deux zones 2 destinées à recevoir des voyants lumineux et/ou des cadrans d'indication d'information du véhicule, ainsi qu'un orifice central 3 destiné à recevoir un indicateur supplémentaire de paramètres du véhicule 4.

Conformément à la figure 1, l'indicateur supplémentaire se présente, pour un véhicule haut de gamme, sous la forme d'un afficheur matriciel 4a adapté aux dimensions de l'orifice d'accueil.

Au contraire, comme visible sur la figure 2, pour un véhicule de gamme inférieure, l'indicateur supplémentaire 4 se présente sous la forme d'un écran de plus faibles dimensions que l'orifice central 3, et un cache 5 est prévu pour masquer l'espace compris entre le petit écran 4b et le contour de l'orifice 3.

Cette dernière solution pour les véhicules bas de gamme n'est pas satisfaisante en terme d'apparence esthétique globale du combiné d'instrumentation.

L'invention vise à pallier cet inconvénient.

A cet effet, l'invention concerne un dispositif formant combiné d'instrumentation pour véhicule automobile.

Selon l'invention, le dispositif comprend un cadran d'affichage, un projecteur d'informations relatives au fonctionnement du véhicule, et une vitre réfléchissante formant écran, interposée entre le cadran et le projecteur, la vitre réfléchissante étant apte à donner une image virtuelle localisée au niveau du cadran, des informations issues du projecteur.

Selon cette caractéristique, l'ensemble à projecteur et vitre de réflexion constitue un indicateur d'information au même titre que l'afficheur matriciel précité mais qui délivre son information au sein du combiné par le biais d'une réflexion optique. Et du fait que cet indicateur ne délivre pas son information par vision directe, l'absence de celui-ci dans le cas de véhicules automobiles bas de gamme n'aura aucune influence sur l'aspect esthétique du combiné aux pièces pourtant standardisées.

Selon une autre caractéristique, le projecteur est situé au sein du combiné dans une zone destinée à être invisible par un utilisateur du véhicule.

De préférence, le cadran d'affichage comprend des inscriptions relatives au fonctionnement du véhicule, et la vitre de réflexion est translucide ou partiellement translucide de sorte que les inscriptions du cadran viennent à être superposées avec l'image virtuelle.

Avantageusement, la vitre est teintée ou métallisée au moins partiellement et le combiné comprend un éclairage du cadran d'affichage sous-jacent.

Selon un mode de réalisation préféré de l'invention, la vitre est plate ou la vitre est concave, avec un centre de courbure situé vers l'utilisateur.

De préférence, le projecteur est de type dalle LCD ou de type matrice transversale.

Selon une variante de réalisation possible, le dispositif comprend un obturateur s'interposant aux rayons lumineux émis par le projecteur en direction de l'utilisateur.

L'invention sera mieux comprise, et d'autres caractéristiques et avantages de celle-ci apparaîtront au cours de la description suivante, faite en référence aux figures annexées, parmi lesquelles :
- la figure 1 précitée représente une vue schématique de face d'un dispositif formant combiné de type connu et destiné à un véhicule haut de gamme ;
- la figure 2 susmentionnée est une vue analogue à la figure 1 mais pour un véhicule de type bas de gamme ;
- la figure 3 illustre une vue de face avec arrachement d'un dispositif selon l'invention intégré au sein d'un véhicule ;
- la figure 4 montre une vue en perspective éclatée des composants du dispositif de la figure 3 ;
- la figure 5 est une vue en coupe transversale du dispositif de la figure 3 illustrant le schéma de principe de son fonctionnement.

Le dispositif 11 formant combiné d'instrumentation représenté sur les figures est destiné à équiper un véhicule automobile, par exemple au niveau de sa planche de bord, en étant notamment visible par le conducteur pour le tenir informé sur l'état des éléments de fonctionnement du véhicule.

À titre d'exemple, l'une des informations fournies par ce dispositif 11 porte sur la vitesse de déplacement du véhicule, sur la vitesse de rotation du moteur du véhicule, ou sur le niveau de combustible présent au sein du réservoir de ce véhicule.

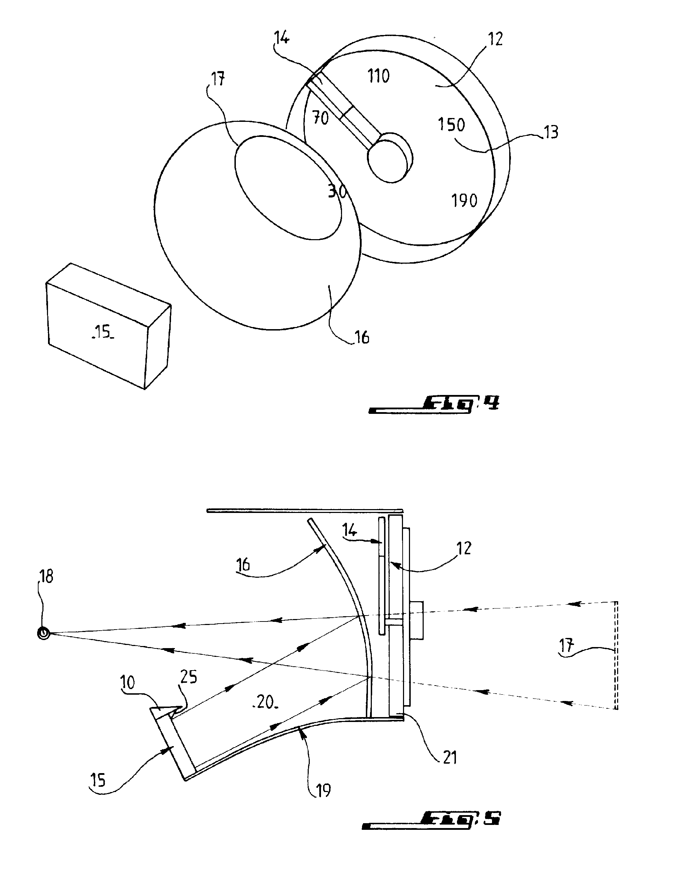

Ainsi, le dispositif 11 comporte un ou plusieurs cadrans 12, dont un seul est représenté sur la figure 4, chaque cadran 12 portant par exemple des inscriptions 13 relatives à l'un des éléments de fonctionnement du véhicule, et un moyen d'indexation mobile 14 associé pour pointer au moins l'une des inscriptions 13 du cadran 12 afin d'indiquer au conducteur l'état de l'élément du véhicule correspondant. L'exemple représenté sur les figures 3 et 4 est un cadran 12 informant le conducteur sur la vitesse de déplacement du véhicule en kilomètres par heure.

Selon l'invention, le dispositif comprend un projecteur 15 et une vitre de réflexion formant écran 16 aptes à coopérer ensemble pour fournir à l'utilisateur une information supplémentaire sur le fonctionnement du véhicule ou toute autre donnée demandée par l'utilisateur, sous la forme d'une image apparaissant sur un plan sensiblement parallèle au cadran de vitesse 12.

Conformément à la figure 3, cette information constitue une image virtuelle matérialisée par l'ellipse 17 et concerne par exemple une direction à suivre par le véhicule sur un plan routier.

Plus précisément, tel que visible sur la figure 5, le projecteur 15 et la vitre de réflexion 16 forment un système optique agencé dans le combiné en avant du cadran 12.

Le projecteur 15 est monté sur une paroi inférieure 19 du combiné présentant une pente d'inclinaison depuis le bord inférieur 21 du cadran 12 et dirigée vers le bas du véhicule. Ce projecteur 15 est apte à former une image à l'infini matérialisée par le faisceau parallèle 20 de la figure 5.

Ce projecteur 15 peut consister en une dalle d'affichage à cristaux liquides (dalle LCD) ou en un afficheur matriciel pour ordinateur de bord et les informations présentées par ce projecteur peuvent concerner des rappels de consignes de navigation, des messages d'alertes de sous gonflage des pneus. Bien entendu, ces informations sont présentées inversées latéralement par rapport aux informations finales devant être vues par l'utilisateur.

Ce projecteur 15 est en outre disposé dans une zone du combiné non visible par l'utilisateur et est surmonté d'un obturateur 10 venant s'interposer aux rayons 25 émis par le projecteur 15 et se dirigeant directement vers l'utilisateur.

Par ailleurs, la vitre de réflexion 16 est montée sur la paroi inférieure 19 du combiné entre le projecteur 15 et le cadran 12, à par exemple une quinzaine de centimètres du cadran 12, de façon à donner une image virtuelle 17 du faisceau parallèle 20 issu du projecteur 15.

Cette vitre 16 recouvre l'ensemble du cadran 12 et est en outre transparente pour permettre de rendre visible les inscriptions 13 du cadran sous-jacent 12. Dans ce cas, le matériau constitutif de la vitre 16 pourra être constitué de verre traité ou de plastique tel que le PMMA ou le PC.

Ainsi, l'image virtuelle 17 et l'image directe du cadran 12 se retrouvent à être superposées l'une à l'autre aux yeux de l'utilisateur qui perçoit alors simultanément les deux informations.

Afin de grossir l'image virtuelle créée 17 et/ou donner une impression d'éloignement entre l'image virtuelle 17 et le cadran 12, la vitre 16 peut présenter une concavité dont le point de courbure est situé au niveau des yeux de l'utilisateur.

Le rayon de courbure de cette vitre est alors calculé en fonction du grossissement souhaité de l'image virtuelle donnée par le projecteur 15.

A titre d'exemple, le type de grossissement pourrait être « x 2 » ou « x 3 », auquel correspond un rayon de courbure d'environ une quarantaine de centimètres.

Avantageusement, cette courbure et l'étendue de la vitre 16 sont choisies pour donner à l'image virtuelle une symétrie axiale relativement à l'image contenue dans le faisceau parallèle 20.

De façon à maximiser la réflexion du faisceau 20, la vitre 16 est avantageusement légèrement opaque par exemple teintée ou métallisée.

Cette légère opacité peut être mise à profit pour dissimuler une partie de l'indicateur 14 du combiné tel qu'illustré sur la figure 3 pour laquelle le centre du cadran 12 est occulté et sert de lieu de localisation de l'image virtuelle 17.

Dans ce cas, la luminosité de la partie périphérique du cadran 12 est augmentée de façon à rendre les inscriptions qui y sont portées visibles par l'utilisateur, malgré l'opacité de la vitre 16.

L'invention ci-dessus décrite apporte différents avantages parmi lesquels :
- la possibilité de présenter des informations au conducteur sur plusieurs niveaux, créant un effet de profondeur, dans un encombrement réduit,
- la possibilité de réaliser des effets de superposition d'images tels que la reproduction d'un mouvement d'aiguille en couleur sur un écran monochrome,
- la facilité de remplacement ou de suppression du projecteur, ne nécessitant aucune adaptation du reste du combiné, du fait de l'invisibilité du projecteur par l'utilisateur.

## Revendications

1. Dispositif formant combiné d'instrumentation pour véhicule automobile comprenant un cadran d'affichage (12), un projecteur (15) d'informations (20) relatives au fonctionnement du véhicule, et une vitre réfléchissante formant écran (16), interposée entre le cadran (12) et le projecteur (15), la vitre réfléchissante (16) étant apte à donner une image virtuelle (17) localisée au niveau du cadran (12) des informations (20) issues du projecteur (15).

2. Dispositif selon la revendication 1, dans lequel le projecteur (15) est situé au sein du combiné dans une zone destinée à être invisible par un utilisateur du véhicule.

3. Dispositif selon la revendication 1 ou 2, dans lequel le cadran d'affichage (12) comprend des inscriptions (13) relatives au fonctionnement du véhicule, et dans lequel la vitre de réflexion est translucide ou partiellement translucide de sorte que les inscriptions du cadran (12) viennent à être superposées avec l'image virtuelle (17).

4. Dispositif selon l'une des revendications précédentes, dans lequel la vitre est teintée ou métallisée au moins partiellement, et dans lequel le dispositif (11) comprend un éclairage du cadran sous-jacent (12).

5. Dispositif selon l'une des revendications précédentes, dans lequel la vitre est plate ou concave avec un centre de courbure situé vers l'utilisateur.

6. Dispositif selon l'une des revendications précédentes, dans lequel le projecteur (15) est de type dalle LCD ou de type matrice transversale.

7. Dispositif selon l'une des revendications précédentes, comprenant un obturateur (10) s'interposant aux rayons lumineux (25) émis par le projecteur (15) en direction de l'utilisateur.
